# EUROPEAN PATENT APPLICATION

(11) **EP 2 476 926 A1**
(43) Date of publication of application: **18.07.2012**
(21) Application number: 10813613.6
(22) Date of filing: 13.08.2010
(51) Int. Cl.: F16C 33/78, F16C 19/52, F16C 23/08, F16C 33/48

(54) **SEALED ROLLING BEARING**

(30) Priority: 07.09.2009 JP 2009205394
(71) Applicant: NTN Corporation, Osaka-shi, Osaka 550-0003 (JP)
(72) Inventor: MAEDA Takeshi, Kuwana-shi Mie 511-0811 (JP)
(74) Representative: Grünecker, Kinkeldey, Stockmair & Schwanhäusser
(86) International application number: PCT/JP2010/063739
(87) International publication number: WO 2011/027662

(57) **Abstract**

An object of the present invention is to provide a sealed rolling bearing, where sealing plate fitting spaces are reduced to virtually zero, thereby allowing parts compatibility with non-sealed rolling bearings due to its bearing size and also enabling the color of lubricant to be visually observed from the outside.

The sealed rolling bearing includes a rolling bearing main body; and sealing members each provided between outside edges of an inner ring track 17 and an outer ring track 16 in the rolling bearing main body. The sealing members are provided by transparent plastic sealing plates 15 and attached to a retainer 14.

## Description

### Technical Field

The present invention relates to a sealed rolling bearing capable of preventing entry of foreign matters.

### Background Art

Sealed rolling bearings typically have the following structure: An inner ring and an outer ring are opposed to each other in an in-out relationship, with rolling elements placed therebetween; sealing plates are press-fitted on both sides of a track in one of these track rings; and the other track ring has both sides of its track contacted or nearly contacted by free ends of the sealing plates (Patent Literature 1). The sealing plates prevent foreign matters from making entry into the bearing while also preventing lubricant from leaking out of the bearing.

Sealing plates having their free ends designed to make contact with the faced track ring are provided by rubber seals which have a backing metal therein. Non-contact sealing plates are provided by metal plates.

In whichever of the types, fitting spaces must be provided on both sides of the tracks in the inner and outer rings, and therefore the inner and the outer rings must have increased widths accordingly. Consequently the size of the bearing is greater than normal non-sealing type rolling bearings (Patent Literature 2). This poses such problems that sealed rolling bearing parts are not compatible with those in non-sealed rolling bearings, and that sealed rolling bearing are heavier.

In order to reduce the sealing plate fitting spaces, the sealing plates are screwed to the retainer in some rolling bearings (Patent Literature 3). The invention which relates to these rolling bearings was made under an object to eliminate deformation risks of the sealing plates or the inner/outer ring(s) when the sealing plate are fitted onto the inner-diameter surface of the outer ring or the outer-diameter surface of the inner ring. To accomplish this, the sealing plates are screwed to the bearing retainer so that the sealing plates have their inner and outer circumferential edges contacting or nearly contacting the outer ring's inner-diameter surface and the inner ring's outer diameter surface.

Sealed rolling bearings require periodical inspection and lubricant replacement since the lubricant which is sealed inside the bearing is subject to deterioration with time. A simple method of determining the extent of lubricant deterioration is to make visual observation of the color of lubricant and compare the color with reference colors.

However, this is not possible in the sealed rolling bearing disclosed in Patent Literature 3 and other conventional sealed rolling bearings since their sealing plates are made of non-transparent material such as metal or rubber and it is impossible to visually observe the color of lubricant from outside the bearing. Therefore, these bearings have a problem that they must be removed and then disassembled each time a visual observation is to be made to the color of lubricant in order to determine the extent of lubricant deterioration.

### Citation List

### Patent Literature

Patent Literature 1: JP-Y-H7-12736
Patent Literature 2: JP-A-H9-317760
Patent Literature 3: JP-A 2007-198540 (see Fig. 1 and Fig. 5)

### Summary of Invention

### Technical Problem

It is therefore an object of the present invention to provide a sealed rolling bearing, where sealing plate fitting spaces are reduced to virtually zero, thereby allowing parts compatibility with non-sealed rolling bearings due to its bearing size and also enabling the color of lubricant to be visually observed from the outside.

### Solution to Problem

In order to achieve the object mentioned above, the present invention provides a sealed rolling bearing which includes a rolling bearing main body comprised of an inner ring, an outer ring, a large number of rolling elements placed between a track in the inner ring and a track in the outer ring, and a retainer for the rolling elements; and sealing members each provided between outside edges of the inner ring track and the outer ring track in the rolling bearing main body. With this arrangement, the sealing members are provided by transparent plastic sealing plates and are attached to the retainer.

The sealing plate may have a region provided with a reference-color decal as a guide for determining the extent of lubricant deterioration.

### Advantageous Effects of Invention

According to the present invention, the sealing plates are attached to the retainer. This reduces sealing plate fitting spaces to virtually zero on both sides of the inner and outer ring track grooves, enabling to make the size of bearing identical with the size of non-sealed rolling bearings, and therefore to make the bearings parts-compatible with each other. At the same time, it is now possible to visually observe the color of lubricant from outside since lubricant on the inner side of the sealing plate is visible. This provides an advantage that the extent of lubricant deterioration can be determined quickly.

Further, the sealing plate is provided by a transparent plate of a synthetic resin. This provides an advantage that it is lighter in weight and lower in cost than those made of rubber or metal.

It should be noted here that a reference-color decal may be bonded to a part of the sealing plate. This allows the above-mentioned determination process to be performed more quickly.

### Brief Description of Drawings

Fig. 1 is a sectional view showing part of an embodiment.
Fig. 2A is a sectional view showing part of a sealing plate in the embodiment whereas Fig. 2B is a front view showing part of the sealing plate.
Fig. 3 is a perspective view showing part of the embodiment.
Fig. 4 is a sectional view showing part of an uncased state in the embodiment.

### Description of Embodiments

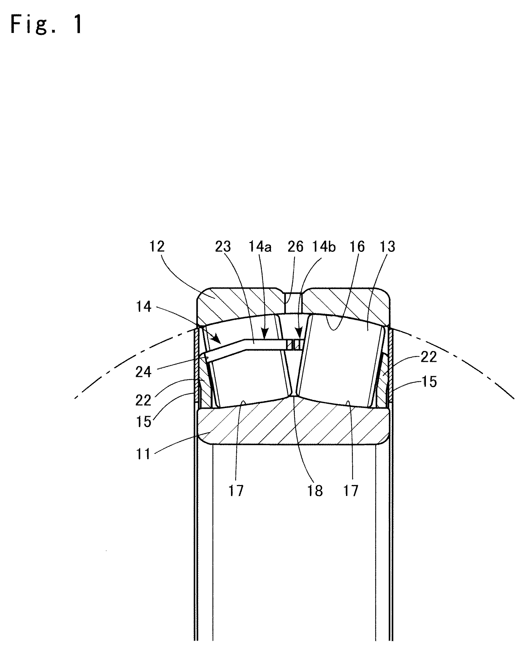

Hereinafter, an embodiment of the present invention will be described based on the attached drawings. Fig. 1 shows a self-aligning roller bearing. This bearing includes a bearing main body comprised of an inner ring 11 and an outer ring 12 disposed coaxially in an in-out relationship; a large number of rollers 13 disposed in two rows between the inner and the outer track rings; and a retainer 14 which holds/guides the rollers 13 equidistantly in a circumferential direction.

The bearing main body and a pair of transparent sealing plates 15 attached to a left side and a right side of the inner and the outer rings 11, 12 constitute a sealed self-aligning roller bearing.

Without the sealing plates 15, the bearing main body has the same size as a non-sealed self-aligning roller bearing, i.e., a type of self-aligning roller bearing that does not make use of sealing plates.

The outer ring 12 has its inner-diameter surface formed with an outer ring track 16 provided by a concave sphere which has its center at the center of the bearing. The inner ring 11 has its outer diameter surface formed with inner ring tracks 17, 17, provided by two rows of concave spheres opposed to the outer ring track 16. Between the two inner ring tracks 17, 17 and being sandwiched by two inner circumferential edges of the tracks, a flat region 18 is formed as a narrow ridge following the curves of the spherical surfaces of the inner ring tracks 17, 17.

The rollers 13 are barrel-shaped, each having a spherical surface and being placed between the inner ring track 17 and the outer ring track 16.

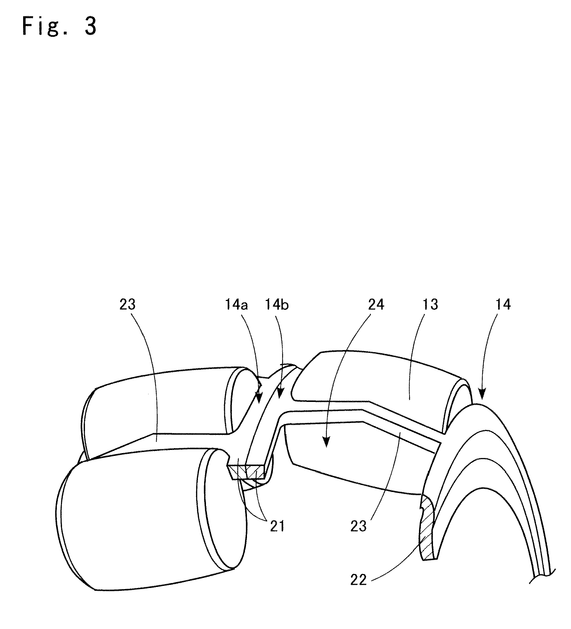

The retainer 14 is a cage type retainer made by punching a steel plate, formed with two rows of retainers which are symmetrical to each other in the left-right direction as shown in Fig. 1 and Fig. 3, i.e., a left-side retainer 14a disposed on an outside surface of the left-side inner ring track 17 and a right-side retainer 14b disposed on an outside surface of the right-side inner ring track 17. Each of the retainers 14a, 14b includes an inside ring 21 and an outside ring 22 opposed axially to each other, and beams 23 connecting these rings axially with each other. A large number of the beams 23 are provided at a predetermined circumferential interval. Spaces between two adjacent beams 23 are rectangular pockets 24. Each pocket 24 holds and supports one of the rollers 13.

The outside ring 22 has its inner circumferential surface contacted by the inner ring track 17 (see Fig. 1) . Due to this contact, the retainer 14 is guided by the inner ring 11 and is classified as an inner-ring-guided type.

As the outside ring 22 makes contact with the inner ring track 17, the outside ring 22 closes approximately a half of a gap space between the inner and the outer rings 11, 12. Therefore, the bearing will be completely sealed if the remaining uncovered half, or slightly less, is closed by the sealing plates 15.

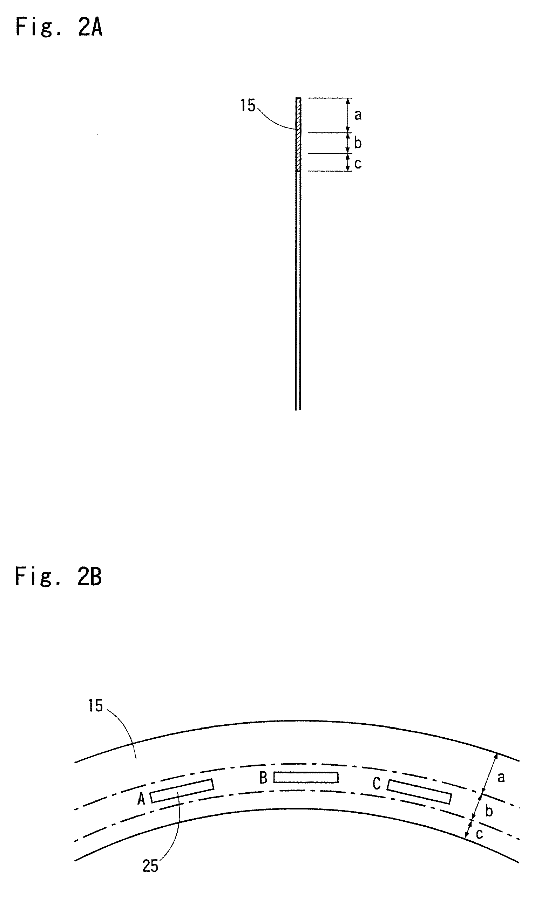

The sealing plates 15 according to the embodiment are provided by annular, transparent plates made of a synthetic resin such as PET. Each plate has a closing zone "a" (see Fig. 2) formed along its outer circumferential edge for closing the above-described opening; an adhering zone "b" formed on the radially inner side thereof to oppose to the outside ring 22; and a reinforcing zone "c" formed on the radially inner side of the adhering zone b. The reinforcing zone "c" increases strength of the sealing plate 15 by its width, while increasing ease of handling as well.

The sealing plate 15 is attached by bonding the adhering zone "b" onto an outer side surface of the outside ring 22. The closing zone "a" is positioned so that its outer circumferential edge is non-contacting with the outer ring track 16, with a very slight gap which is narrow enough not to cause loss of sealing.
It should be noted here that although the closing zone "a" is principally, non-contact (gapped) as described above, a contact type configuration may be used in cases where increased level of dust-proofing and sealing performances are required.

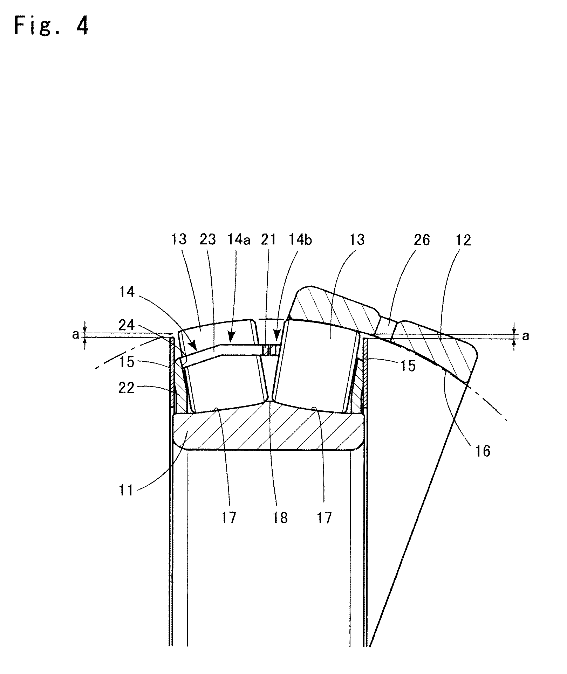

Self-aligning roller bearings are sometimes "uncased" as shown in Fig. 4, by dislocating the outer ring 12 from the inner assembly which is composed of the inner ring 11, the rollers 13 and the retainer 14, in mutually opposite directions so as to expose the rollers 13 for a purpose of inspecting the interior of the bearing for example.

It is impossible to uncase if the bearing is in a state as shown in Fig. 1 where the sealing plates 15 have their outer circumferential edges located on an imaginary arc line (see alternate long and short dash lines in Fig. 1) extended from an arc defined by the outer ring track 16, or located on the outer side which is closer to the outer ring 12, in a sectional plane that contains the axis of the outer ring 12. In these states, the sealing plates 15 will interfere with the outer ring 12 if uncasing is attempted.

The interference is avoided, however, and it becomes possible to uncase if there is provided a predetermined gap "a" as shown in Fig. 4, on the inner, axis side of the extended arc line (see alternate long and short dash lines in Fig. 4) from the arc defined by the outer ring track 16 in the sectional plane that contains the axis of the outer ring 12. By setting the gap "a" to a minimum value at which the sealing is not yet lost, it is possible to maintain the sealing intact.

As shown in Fig. 2B, the sealing plate 15 has its outer surface provided with reference-color decals 25 along the closing zone "a", over an area corresponding to the adhering zone "b" or an area corresponding to both the adhering zone "b" and the reinforcing zone "c". Each reference-color decal 25 has a symbol such as A, B, C to indicate the extent of lubricant deterioration determined from the color of the lubricant. For reference, Fig. 1 also shows a lubricant application hole 26.

The above is a sealed self-aligning roller bearing as an embodiment. This bearing can be used exactly in conventional manners, allowing relative alignment between the axis on the side of the inner ring 11 and a housing on the side of the outer ring 12 with respect to the bearing center. Foreign matter entry from outside is prevented by the sealing plate 15 and the outside ring 22 of the retainer 14. They also prevent lubricant leakage.

During operation, lubricant fills the entire space inside the bearing, and therefore part of the lubricant makes contact with an inner surface of the closing zone "a" of the sealing plate 15. When determining the extent of lubricant deterioration, the lubricant inside the bearing is visually observable from outside, through the closing zone "a". Then, observed color of the lubricant can be compared to colors in the reference-color decals 25 for difference in color, to determine the extent of lubricant deterioration.

It should be noted here that although the above embodiment covers only a self-aligning roller bearing, the present invention is applicable to rolling bearings in general, including non-self-aligning roller bearings, ball bearings, and other bearings.

### Reference Signs List

- 11: inner ring
- 12: outer ring
- 13: roller
- 14: retainer
- 14a: left retainer
- 14b: right retainer
- 15: sealing plate
- 16: outer ring track
- 17: inner ring track
- 18: flat region
- 21: inside ring
- 22: outside ring
- 23: beam
- 24: pocket
- 25: reference-color decal
- 26: application hole

## Claims

1. A sealed rolling bearing comprising: a rolling bearing main body including an inner ring, an outer ring, a large number of rolling elements placed between a track in the inner ring and a track in the outer ring, and a retainer for the rolling elements; and sealing members each provided between outside edges of the inner ring track and the outer ring track in the rolling bearing main body; wherein, the sealing members are provided by transparent plastic sealing plates and are attached to the retainer.

2. The sealed rolling bearing according to Claim 1, wherein the rolling bearing main body is dimensionally identical with a non-sealed rolling bearing, with the constituent members being compatible with those in the non-sealed rolling bearing.

3. The sealed rolling bearing according to Claim 1 or 2, wherein the retainer is a cage type retainer including a pair of rings axially opposed to each other and a large number of beams provided between the rings at a predetermined circumferential interval, with spaces between two adjacent beams serving as pockets for storing the rolling elements, the rings making contact with the inner ring thereby giving the retainer an attribute as an inner-ring-guided retainer.

4. The sealed rolling bearing according to Claim 3, wherein the sealing plates are bonded to the rings of the retainer.

5. The sealed rolling bearing according to Claim 3 or 4, wherein the sealing plates close gaps between the outer ring track and each ring of the retainer, whereby the rings and the sealing plates jointly provide sealing between the inner ring track and the outer ring track.

6. The sealed rolling bearing according to one of Claims 1 through 5, wherein the sealing plate has three circumferential zones consisting of: a closing zone along an outer circumferential edge of the sealing plate; an adhering zone along the closing zone on a radially inner side thereof; and a reinforcing zone along the adhering zone on a radially inner side thereof.

7. The sealed rolling bearing according to one of Claim 1 through 6, wherein the sealing plate has a region provided with a reference-color decal as a reference for determining an extent of lubricant deterioration.

8. The sealed rolling bearing according to Claim 7, wherein the reference-color decal is bonded to an outer surface of the adhering zone in the sealing plate.

9. The sealed rolling bearing according to one of Claims 1 through 8, wherein the rolling bearing main body is provided by a self-aligning rolling bearing; the sealing plates have their outer circumferential edges located on a side closer to an axis of the outer ring than an extension of an arc defined by the outer ring track, in a sectional plane that contains an axis of the outer ring.

10. The sealed rolling bearing according to Claim 9, wherein the rolling bearing main body is provided by a self-aligning roller bearing or a different kind of rolling bearing.
